# EUROPEAN PATENT APPLICATION

(11) **EP 1 017 150 A2**
(43) Date of publication of application: **05.07.2000**
(21) Application number: 99830707.8
(22) Date of filing: 12.11.1999
(51) Int. Cl.: H02J 9/00

(54) **Improvement to power supply systems, particularly for telephone plants**

(30) Priority: 30.12.1998 IT RM980300 U
(71) Applicant: Euroiset Italia s.r.l., 00134 Roma (IT)
(72) Inventor: Glorio, Giovanni, Monte Carlo 98000 (MC)
(74) Representative: Taliercio, Antonio

(57) **Abstract**

In an operation system comprising an energy station (14A; 22A), a group of storage batteries (17) and a group of user apparatuses (15), an improved power supply system characterised in that it comprises a main distribution board (10) and a group of battery connection boards (11a, 11b, 11c), and further characterised in that said battery connection boards are inserted in the connection lines (28) between said storage batteries (17) and said energy station (14A; 22A), said main distribution board (10) is connected to said battery connection boards (11a, 11b, 11c) by means of respective connection lines (31) and to said energy station (14A; 22A) by means of further connection lines (30) and said user apparatuses are directly and exclusively connected to said main distribution board (10) by means of independent connection lines (29).

## Description

This invention broadly relates to power supply systems for apparatuses, in particular telephone plants, and still more particularly it relates to an improved power supply system having a very simple construction and provided with functional and safety capabilities surely better than any prior art system.

As it is known, a rational exploitation of the energy resources is becoming even more and more not only a critical success factor of all industrialised societies, but also and in principle the condition itself for their subsistence. The energy sources are an economic resource the exploitation of which affects the industrial competition and consequently the economic present and future security of a Country, as well as the environmental qualities and the life itself of the citizens. From this view point, all companies are obliged to take very severe decisions concerning the operation and energy cost reduction, without jeopardising the expectations of consumers in respect of the quality of the services furnished, in terms of reliability and availability.

As far as the power supply systems for plants are concerned, a cost reduction can be achieved not only by rationalising the apparatuses and by exploiting new technologies, but also by adopting new criteria for circuit plant design.

Within the frame of these problems, it is a broad object of the present invention to suggest a novel and improved plant construction adapted to rationalise the power supply systems to be amortised in short time terms, thereby furnishing a highly versatile construction and achieving a noticeable reduction of the operation costs.

Even if the present invention will be particularly described in connection with telephone plants, it should be clearly understood that the solutions that will be suggested are in a range also including in addition to the disclosed application further utilisation fields that those skilled in the art can easily identify.

As it is known, a power supply system is functionally comprised of an electric plant assembly designed for generating and distributing electric power for feeding all apparatuses forming for instance a telephonic plant. The power supply system substantially includes all apparatuses performing specific functions and connected to various users by means of suitable circuits.

In the frame of a power supply system, the DC/AC converter plays a relevant role and substantially comprises converter apparatuses (rectifiers, inverters), distribution boards and connections (copper cord and copper bar connectors). All these as well as other components, such as the storage batteries, should be conforming to legal requirements and have a defined average life, thereby requiring well scheduled revisions and substitutions, so as to fulfil and harmonise the safety and functionality with the economic requirements.

Due to the present constructions of the concerned plants, the substitution activities of the apparatuses in general entail completely or at least partially disassembling the circuits included therein, with resulting unavoidable costs.

This invention relates to these problems and it is based upon a novel plant concept that enables improvements to be simultaneously achieved from economic, functional and service safety during operation view point.

It is specific subject matter of this invention to provide, in the frame of an operation system comprising an energy station, a group of storage batteries and a group of user apparatuses, an improved power supply system comprising a main distribution board and a group of battery connection boards, wherein said battery connection boards are inserted in the connection lines between said storage batteries and said energy station, said main distribution board is connected to said battery connection boards by means of respective connection lines and to said energy station by means of further connection lines and said user apparatuses are directly and exclusively connected to said main distribution board by means of independent connection lines.

In the preferred embodiment, an emergency output board connected to said main distribution board is provided.

Furthermore, the preferred embodiment comprises a buffer converter connected to said main distribution board.

Further particulars and advantages of this invention will be apparent from the following description with reference to enclosed drawings wherein the preferred embodiment is shown by way of illustration and not by way of limitation.

In the drawings:
Figure 1 shows schematic view of a power supply system comprising, in addition to conventional components, such as batteries and energy station, specific components according to this invention including a main distribution board and a plurality of battery connection boards,
Figures 2A-2E show the working stages for substituting the energy station in a conventional power supply system,
Figures 3A-3F show the working stages for substituting the energy station in a power supply system according to this invention.

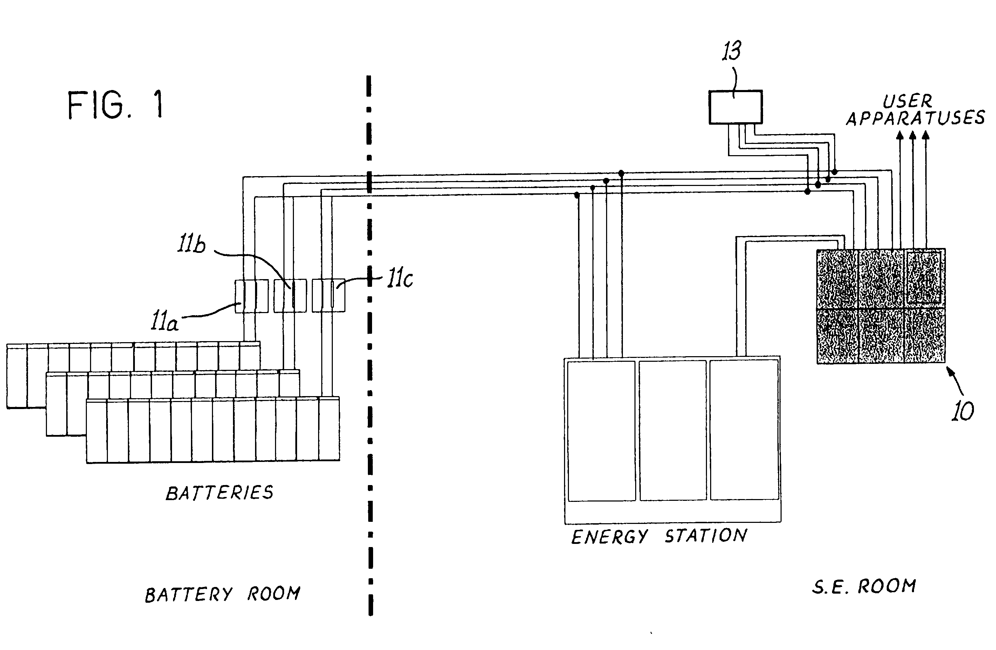

By referring now to the drawings and in the first place to Figure 1, it can be observed that the system according to this invention includes two essential sections or components : a main distribution board 10, directly connected to the output of the TLC plant (energy station) and two or three battery connection boards 11a, 11b, 11c, for the case of a plant including two or three storage batteries, to which the terminal copper cords or bars are connected in the storage battery room.

As it can be further observed in Figure 1, the user circuits (switches, A.F., T.P., etc.) are no more connected to the converter apparatus (energy station), but only the circuits related to the batteries are connected to the converter apparatus (energy station) as, according to logic concepts, it is required for a generator machine, thereby eliminating various distribution boards together with related drawbacks of functional and safety character, such as multiple connections to a single connector, overburden of cables connected to the power supply bars, impossibility to control the current consumption, critical working tolerances, etc..

According to the suggestions of this invention, all user apparatuses are derived from the main distribution board 10, that can be installed in any suitable section of the plant.

Auxiliary but significant components according to this invention include a buffer converter 16A and an emergency connection or output board 13.

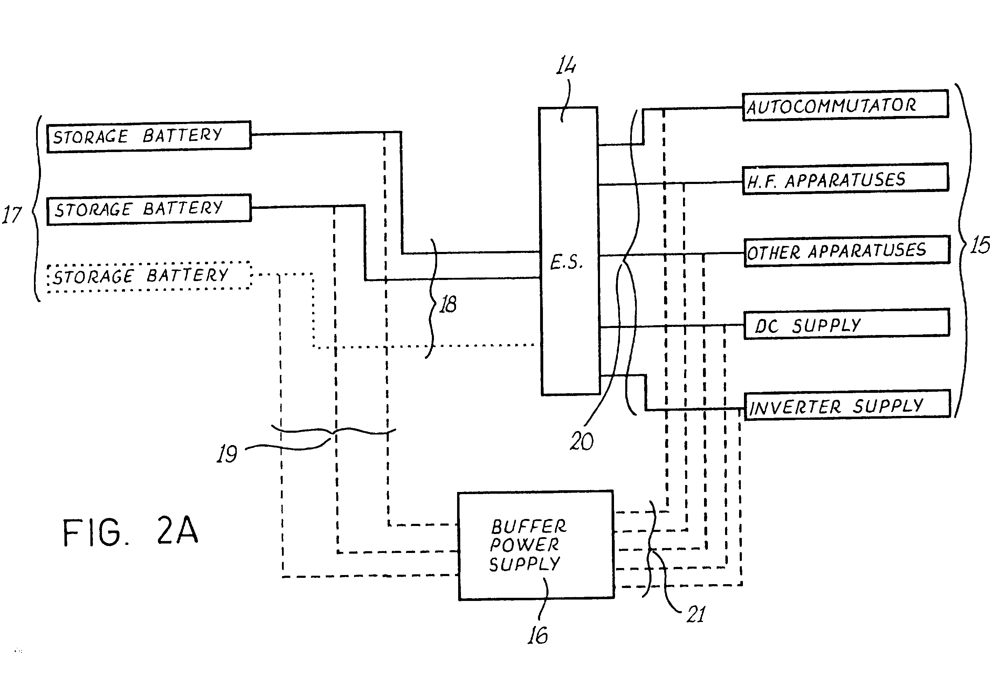

Before further examining the construction and the connection and use procedure of the distribution board according to this invention, it will be convenient to briefly discuss an example of use of a plant according to the prior art, as shown in Figures 2A-2E, in a circumstance in which a new energy station 22 is to be substituted for an old one.

In the very first place, it is to be remarked that, for clarity purposes, the mains connections have not been illustrated because they are well known to those skilled in the art; it can be observed now that the energy station 14 is connected, on one side, to user apparatuses 15 that should be supplied with electrical current by means of conductors 20 and, on the other side, to the storage batteries 17, by means of conductors 18. Should the possibility arise that the energy station 14 be for any reason temporarily unusable, then it will be necessary to utilise a buffer power supply section 16.

Figure 2A illustrates a first operation stage in which provisional connections are established from the storage batteries 17, through conductors 19, said buffer power supply block 16 as well as conductors 21 up to user apparatuses 15, thereby establishing in this way a parallel connection between the buffer power supply section 16 and the old energy station 14.

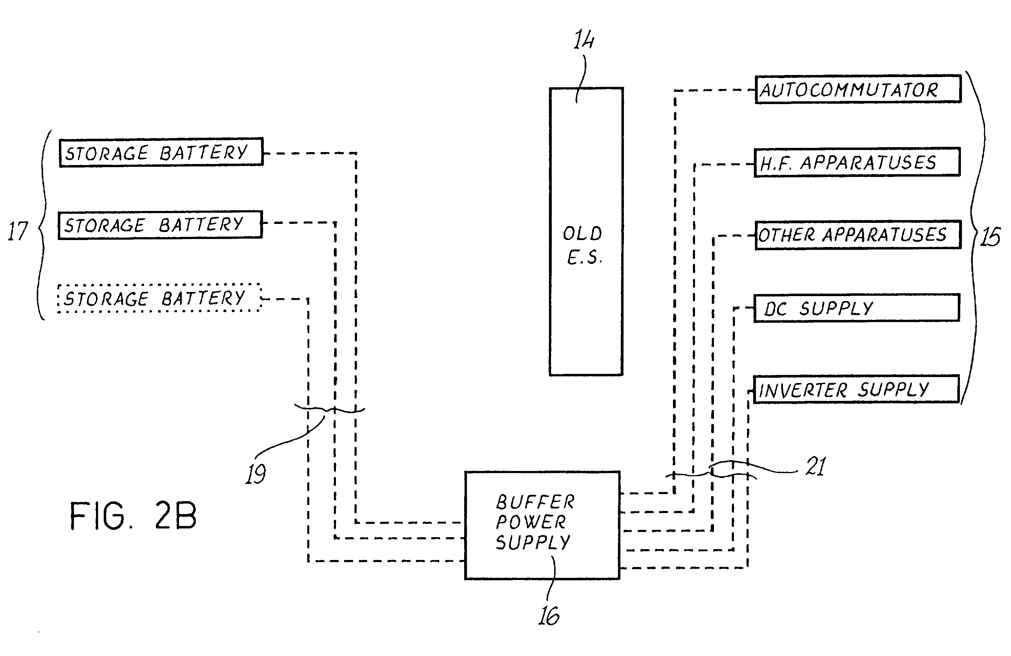

Figure 2B shows the second operation stage in which the stationary connections 18 and 20 between the storage batteries 17 and the energy station 14 as well as between the energy station 14 and the user apparatuses 15 are disassembled and the concerned old energy station 14 is excluded.

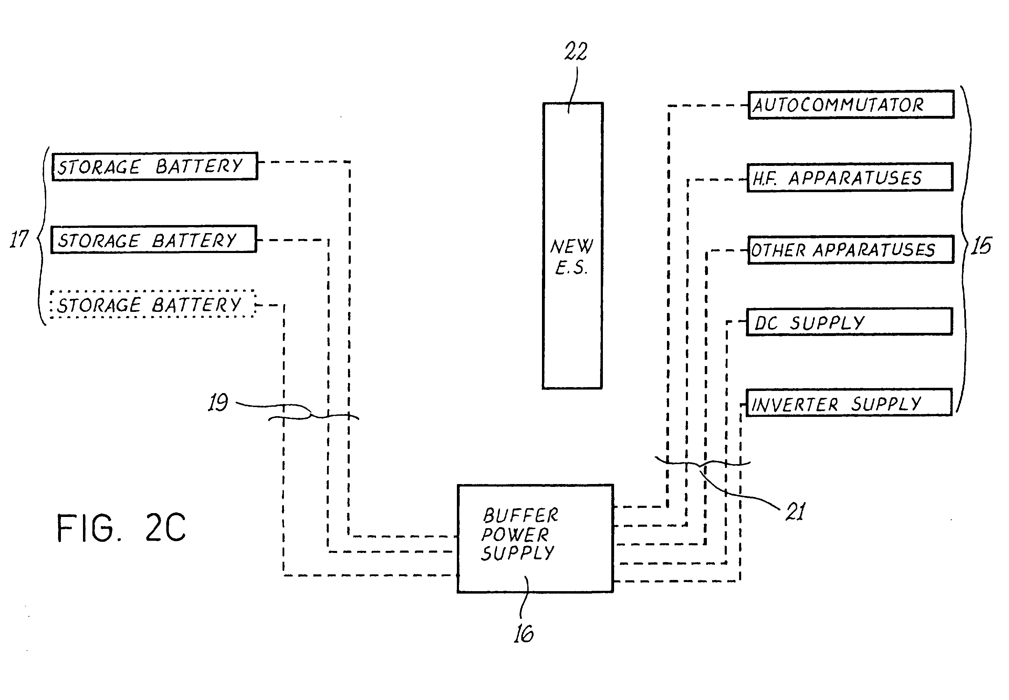

Figure 2C illustrates the subsequent operation stage in which a new energy station 22 is substituted for the old one 14.

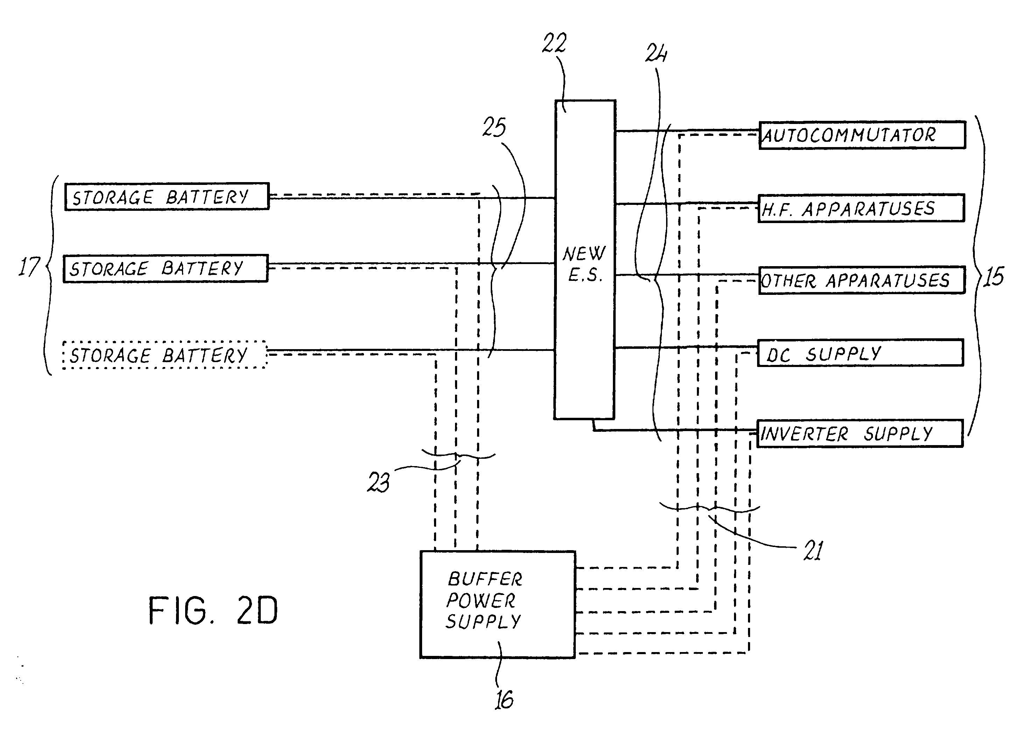

Figure 2D illustrates the subsequent operation stage in which a new energy station 22 is connected between the storage batteries 17 and the user apparatuses 15 by means of connections 24 and 25, in parallel relationship with said buffer power supply section 16.

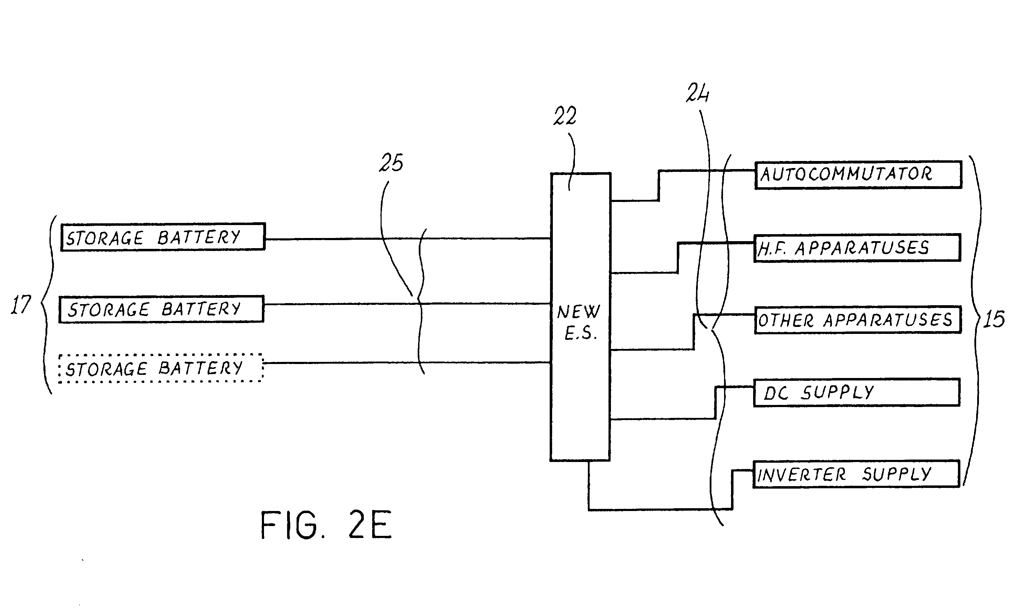

In the subsequent operation stage, as shown in Figure 2E, stationary connections 24 and 25 are maintained between the new energy station 22 and the storage batteries 17, on one side, and the user apparatuses 15, on the other side, and the parallel connected buffer power supply section 16 is excluded.

Figure 2E, therefore, shows the so completed plant including the new energy station 22 fully inserted and operative.

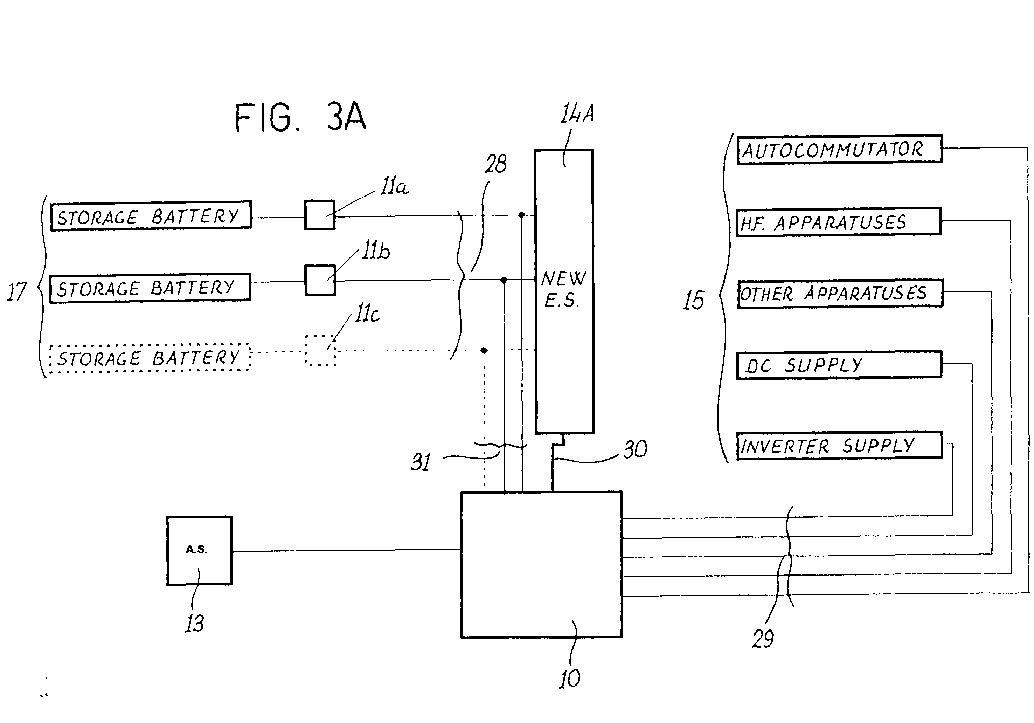

Figures 3A-3F, in contrast, illustrate the succession of the operation stages to be performed when it is desired to utilise a solution according to this invention.

Figure 3A apparently evidences that power to user apparatuses is no more supplied directly from energy station 14A, but, in contrast, it is supplied through a main distribution board 10, connected to energy station 14A through a connection line 30 and to said user apparatuses 15 through connection lines 29. Energy station 14A is additionally connected to the storage batteries 17 by means of connection lines 28 in which battery connection boards 11a, 11b and 11c are inserted. The above mentioned main distribution board 10 is further connected to the storage batteries 17 through connection boards 11a, 11b, 11c through conductors 31, derived from conductors 28, as well as to energy station 14A through conductor 30. As it is shown in the Figure, an emergency output board 13 is connected to the main distribution board 13 in order to cope with emergency situations or to carry out substitution operations of the existing converters.

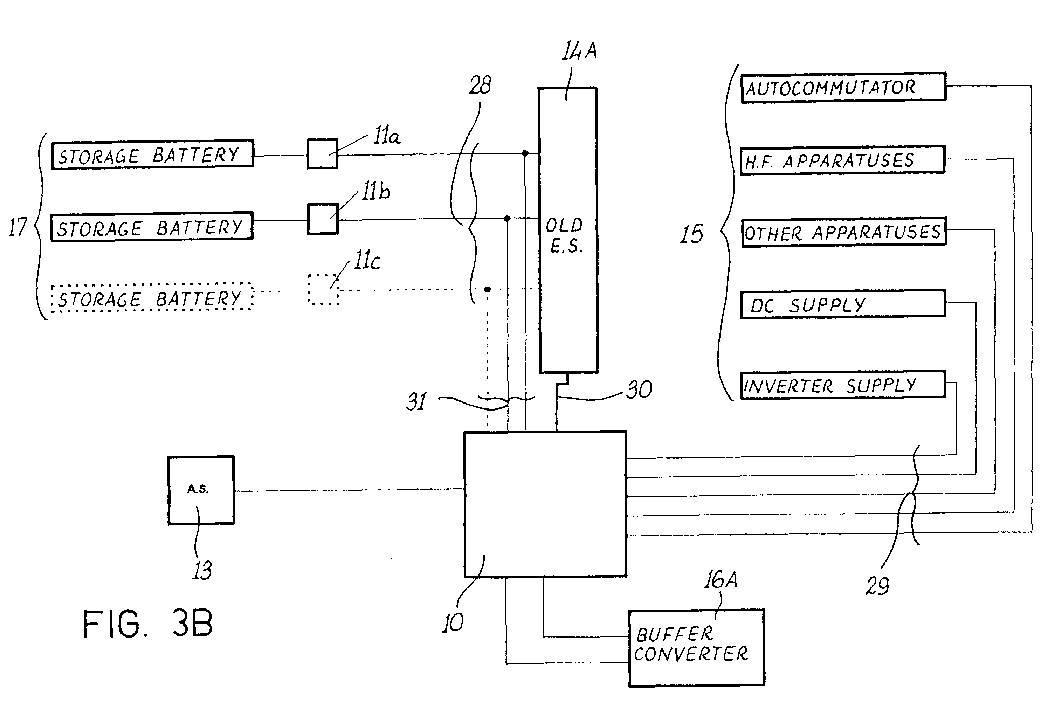

When the need arises that a new energy station be substituted for the old energy station 14A, as it can be observed in Figure 3B, it will be necessary, in the first place, to connect a buffer converter 16A to the main distribution board 10.

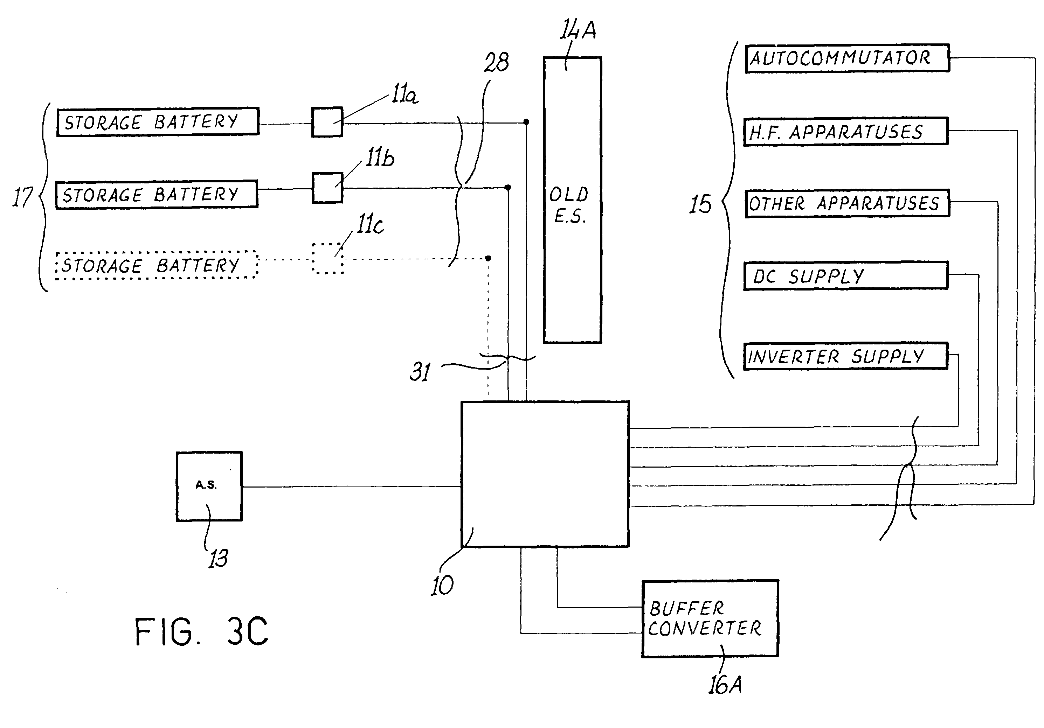

The subsequent step, as illustrated in Figure 3C, is carried out with exclusion of the old energy station 14A by sectioning the connections 28 and 30 existing between said energy station and the storage batteries 17 and the main distribution board 10, respectively, while the user apparatuses 15 are still powered from the main distribution board 10 through connection lines 29 from the buffer converter 16A.

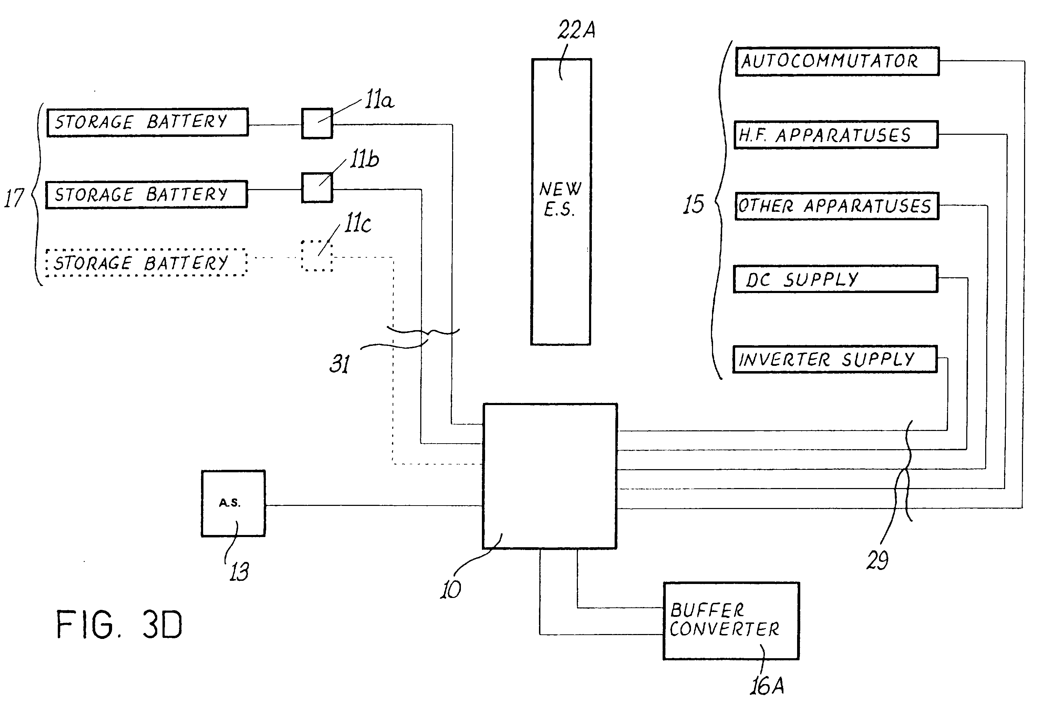

The following step provides for inserting the new energy station 22A in substitution for the old one 14A, as it is shown in Figure 3D.

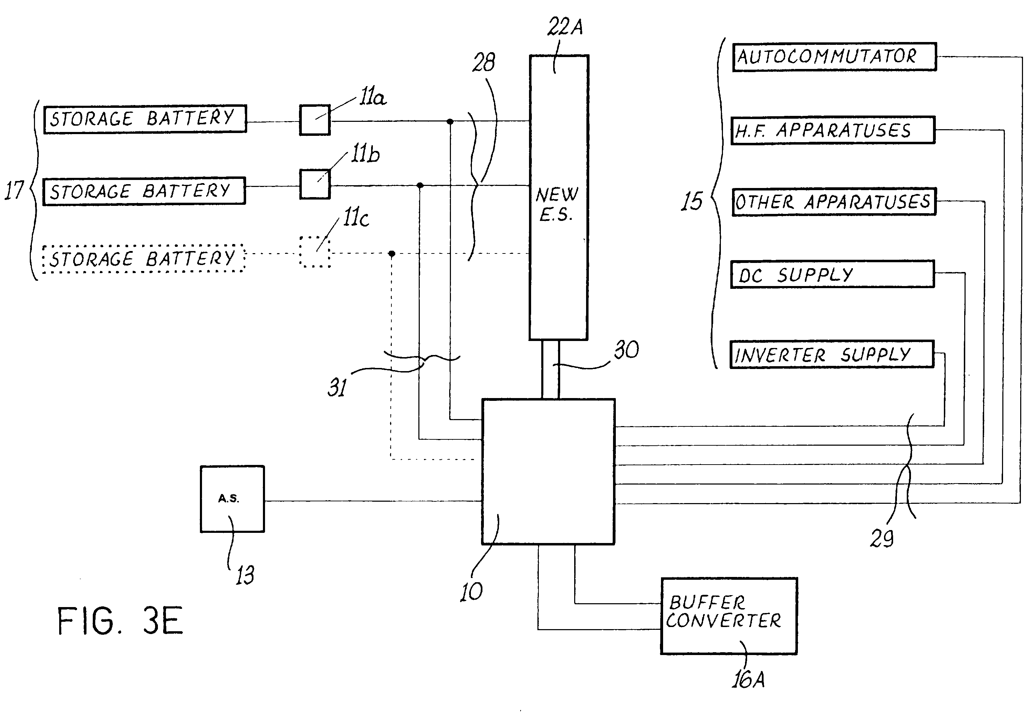

The subsequent stage illustrated in Figure 3E provides for restoring the connections 28 between the battery connection boards 11a, 11b, 11c and the new energy station 22A and for restoring the connection 30 between the new energy station 22A and the main distribution board 10.

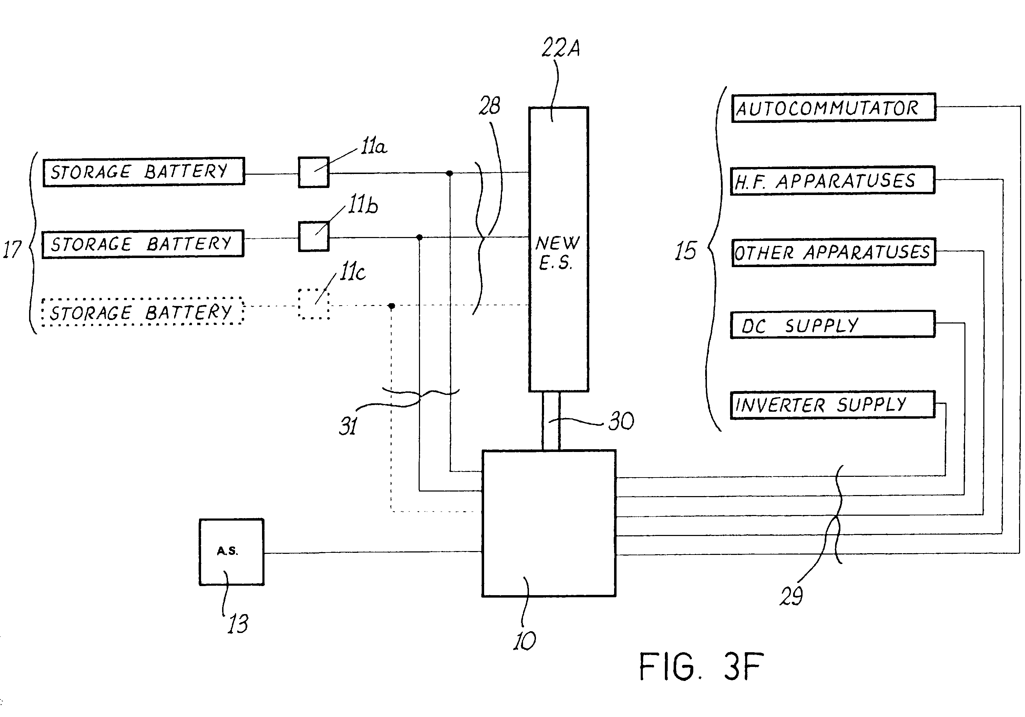

The last stage illustrated in Figure 3F results into completion of the assembly and provides for removing the connection to the emergency buffer power supply 16A.

The main distribution board 10 can be easily installed in any convenient location in the concerned plant and it has further operation characteristics that will be designed by those skilled in the art based upon their expertise, besides offering economic advantages as it will be apparent hereinbelow.

Taking for instance the complete construction of Figure 3E into consideration, it can be observed that, in the first place, it is possible to carry out the connection operations without affecting the service course, in view of the fact that each shunt can be equipped with fuse switches, so as to always operate in full electrical safety conditions.

The main distribution board 10 can be equipped in such a way as to control the power consumption of each individual circuit, by providing its outputs with a suitable ammeter.

A further functional characteristic that any skilled in the art can easily understand is that a main distribution board 10 according to this invention enables any individual storage battery in group 17 to be charged without affecting the functionality of the plant as a whole or the connection of an energy source to be carried out with the whole system, either from a DC generator group or from a buffer energy station. By adopting suitable switches in said main distributor board 10, it is possible to realise connections with said DC emergency output board 13 in order to remotely handle the charging operations of said storage batteries or of each individual battery, without directly performing any operation on the concerned main distribution board 10. From a global view point, any substitution or detachment intervention on the storage batteries is made easier, apparently reducing the costs connected with such activities, in view of the fact that the sole connections to be substituted are the terminal stubs 28 and 30.

It is not believed to be necessary to fully discuss all connection circuit details adapted to achieve the above outlined functionalities or other operation possibilities, since any person skilled in the art can easily understand them.

Only for the sake of completeness, it can be added that the apparatus can be provided with an indication or signalling and control system, installed for instance on all front and rear boards, in order to eliminate the possibility that the board doors be left inadvertently open and additionally these board can be provided with triangular key operated closures.

The preferred embodiments of this invention have been described and a number of variations have been suggested hereinbefore, but it should expressly be understood that those skilled in the art can make other variations and changes in the details and in the construction particulars as well as in the circuit solution, without so departing from the scope thereof.

## Claims

1. In an operation system comprising an energy station (14A; 22A), a group of storage batteries (17) and a group of user apparatuses (15), an improved power supply system characterised in that it comprises a main distribution board (10) and a group of battery connection boards (11a, 11b, 11c), and further characterised in that said battery connection boards are inserted in the connection lines (28) between said storage batteries (17) and said energy station (14A; 22A), said main distribution board (10) is connected to said battery connection boards (11a, 11b, 11c) by means of respective connection lines (31) and to said energy station (14A; 22A) by means of further connection lines (30) and said user apparatuses are directly and exclusively connected to said main distribution board (10) by means of independent connection lines (29).

2. A power supply system according to claim 1, characterised in that it comprises an emergency output board (13) connected to said main distribution board (10).

3. A power supply system according to claim 1, characterised in that it comprises a buffer converter (16A) connected to said main distribution board (10).

4. A power supply system according any one of claims 1 to 3, characterised in that said main distribution board (10) comprises all necessary means for connecting, disconnecting or switching the connections between all components of the power supply plant connected thereto, according to the result that it is desired or it is needed to be obtained.

5. A power supply system according to any one of preceding claims and substantially as described in the description and shown in the annexed schematic drawings.
